# EUROPEAN PATENT SPECIFICATION

(11) **EP 0 327 176 B1**
(45) Date of publication and mention of the grant of the patent: **03.05.1995**
(21) Application number: 89200210.6
(22) Date of filing: 30.01.1989
(51) Int. Cl.: A01N 47/22, A01N 47/20, A01N 25/04

(54) **A dispersion on the basis of carbamate and a particle growth inhibiting agent and a method for treating beet culture**
Dispersion auf der Basis von Carbamat und Teilchenwuchschemmungsmittel und Behandlungsverfahren des Rübeanbaus
Dispersion à base de carbamate et d'un agent inhibant la croissance des particles et une méthode de traitement des cultures de la betterave

(30) Priority: 03.02.1988 NL 8800258
(43) Date of publication of application: 09.08.1989
(73) Proprietor: CHEMISCHE FABRIEK BRABANT J.W. VOORBRAAK B.V., NL-4906 CV Oosterhout (NL)
(72) Inventor: Van der Westen, Nicolaas Johannes Maria, NL-4901 AH Oosterhout (NL); Mureau-Lens, Maria Catharina, NL-4822 PA Breda (NL)
(74) Representative: Prins, Hendrik Willem

(56) References cited:
- WO-A-87/05778
- DE-A- 3 118 219
- GB-A- 2 123 294
- NL-A- 8 000 684

## Description

The present invention relates to a watery dispersion of a biologically active carbamate and to a method for treating beet culture.

Watery dispersions of carbamates that are biologically active, particularly in the form of herbicides, are used for controlling weeds in beet and bean cultivation. These watery dispersions cannot be stored in concentrated form for a longer period of time because during storage the dispersed particles grow and the crystals thereby formed acquire dimensions (> 40 »m) such that a solid precipitation results at the bottom which can no longer be absorbed into the dispersion by shaking. Moreover, during spreading of the diluted concentrates, the spreading devices, and spray devices in particular, become blocked. The biological activity also appears to diminish as a consequence of this crystal growth.

WO 87/05778 discloses a herbicidal composition based on biscarbamate comprising further a vegetable oil, surface-active agents having emulsifying and dispersing properties and further water. Accordingly particle growth beyond 40 »m is avoided.

DE-A-31 18 219 relates to the formation of a stable, watery suspension of carbendazim formed by reacting an aqueous solution of carbendazim with an alkali solution or with ammonia gas. Optionally a so called Schutzkolloide is added, examplified for instance polyvinyl pyrrolidone.

The invention has for its object to provide a watery dispersion of a biologically active carbamate such that this dispersion can be stored in concentrated state for a longer period of time and up to temperatures of for instance 40°C (for example for 1-2 years at room temperature and 3-4 months at 40-50°C) without particles of a diameter greater than approximately 40 »m developing in this concentrate.

The result of lengthy result is that such unwanted particle growth can be avoided with a watery dispersion of a biologically active carbamate selected from the group consisting of propham, phenmedipham and desmedipham, comprising polyvinyl, pyrrolidone or a copolymer thereof as particle growth inhibitor, obtained by separately adding the carbamate and the polyvinyl pyrrolidone to a volume of water and forming the watery dispersion, such that after three months at 40°C substantially no carbamate crystals occur in the watery dispersion having a particle size greater than 40 ppm.

As polyvinyl pyrrolidone copolymers can be used copolymers with vinyl acetate, in ratios (PVP/VA) of 70:30 to 30:70. The E-, I- and S-PVP/VA copolymers of GAF in Schiedam, the Netherlands can for example be used.

This polyvinyl pyrrolidone is preferably a cross-linked homopolymer of N-vinyl-2-pyrrolidone and in preference has a mean molecular weight of 40,000 Dalton (obtainable as PVP/K-30 from GAF Schiedam in the Netherlands).

The concentration of the particle growth inhibitor normally lies between 0.05 and 20% by weight. Below 0.05% by weight the particle growth inhibiting effect is usually too small, while the upper limit of 20% by weight is determined substantially by commercial factors. In general the concentration lies between 2 and 10% by weight and more preferably between 5 and 10% by weight. It will further be apparent that the concentration of the particle growth inhibitor is dependent on the quantity of dispersed carbamate and the dispersing agents that may be used.

The carbamate concentration lies normally between 50 and 600 g/l, preferably between 100 and 500 g/l and more preferably between 100 and 400 g/l. This carbamate concentration in the watery dispersion concentrate is to some extent dependent on the quantity of carbamate that is applied per hectare after dilution.

The polyvinyl pyrrolidone or copolymer thereof has been found to inhibit in particular the particle growth of propham (isopropyl carbanilate) and the N-bis-carbamates phenmedipham (methyl-3-(3-methyl carbaniloyloxy)carbanilate) and desmedipham (ethyl-3′-phenyl carbamoyloxy carbanilate).

The watery dispersions according to the invention can contain other active substances in addition to the biologically active carbamate, for instance the herbicides chloroidazon, phenuron and chloropropham.

In addition the dispersions contain the usual dispersing agents such as polyoxypropylene-block polymer with polyoxyethylene, sodium lignosulphonate, calcium dodecyl benzene sulphonate and the like, anti-foam agents such as dimethyl polysiloxane, anti-freeze agent such as ethylene glycol, propylene glycol, a thickening agent such as a homopolysaccharide. Spreading agents, adhering agents and antioxidants can also be added particularly to enable an adequate application of the diluted herbicide.

The invention relates further to a method for treating beet culture with a herbicide wherein the herbicide concentrate according to the invention is diluted with water and applied in a herbicidally active quantity to said beet culture.

Following hereinafter are a number of examples of carbamate dispersions in water, the crystal growth of which has been examined after three months and after a year using a light microscope. Only those concentrated watery dispersions are satisfactory in which after one year substantially no crystals occur with a particle size greater than 40 »m.

It is noted that the examples are only given by way of example and are not intended to restrict the invention thereto.

### Example I (in accordance with the invention)

400 g propham
30 g polyoxypropylene-block polymer with polyoxyethylene (tensiofix * 35600)
15 g sodium lignosulphonate (LX special *)
5 g dimethyl polysiloxane
80 g ethylene glycol
1.2 g homopolysaccharide (rhodopol *)
50 g polyvinyl pyrrolidone
ad. 1000 ml water
It was possible to prepare the dispersion easily in accordance with a conventional formulation method and after three months Storage at 40°C the dispersion had no crystals of a crystal size greater than 40 »m. Nor after a year in storage at room temperature did the dispersion contain any crystals of a dimension greater than 40 »m.

### Example II (not in accordance with the invention)

600 g propham
20 g polyoxypropylene-block polymer with polyoxyethylene (tensiofix * 35600)
10 g sodium lignosulphonate (LX special *)
50 g propylene glycol
5 g dimethyl polysiloxane
1.2 g homopolysaccharide (rhodopol *)
ad. 1000 ml water
It proved possible to prepare this dispersion reasonably easily as according to a conventional formulation method. After three months storage at 40° C however this dispersion contained crystals of a dimension greater than 40 »m, while after storage at room temperature for a one year period the dispersion likewise contained crystals larger than 40 »m. This dispersion does not therefore satisfy the criteria according to the invention.

### Example III (not in accordance with the invention)

400 g propham
20 g polyoxypropylene-block polymer with polyoxyethylene (tensiofix * 35600)
80 g propylene glycol
2.5 g homopolysaccharide (rhodopol *)
5 g dimethyl polysiloxane
ad. 1000 ml water
This dispersion was easy to prepare. The dispersion formed by pouring into water displayed a poor stability however. After three months storage at 40° C the dispersion contained crystals having dimensions greater than 40 »m. After storage at room temperature for a period of one year the dispersion did not contain any crystals of a size larger than 40 »m, so that the criteria according to the invention were only partially satisfied.

### Example IV (not in accordance with the invention)

250 g propham
25 g calcium dodecyl benzene sulphonate dissolved in isobutanol (soprophor 70 *)
10 g polyvinyl alcohol (airvol 540 *)
100 g ethylene glycol
2 g dimethyl polysiloxane
ad. 1000 ml water
It proved possible to prepare this dispersion easily as according to a conventional formulation method, but the dispersion possessed insufficient stability. After only three days storage at room temperature or at 40° C the dispersion contained crystals having a dimension greater than 40 »m.

## Claims (Claims for the following Contracting State(s): BE, CH, FR, GB, IT, LI, NL)

1. Watery dispersion of a biologically active carbamate selected from the group consisting of propham, phenmedipham and desmedipham, comprising polyvinyl, pyrrolidone or a copolymer thereof as particle growth inhibitor, obtained by separately adding the carbamate and the polyvinyl pyrrolidone to a volume of water and forming the watery dispersion, such that after three months at 40°C substantially no carbamate crystals occur in the watery dispersion having a particle size greater than 40 ppm.

2. Dispersion as claimed in claim 1, characterized in that the particle growth inhibitor is a cross-linked homo-polymer of N-vinyl-2 pyrrolidone.

3. Dispersion as claimed in claim 1 or 2, characterized in that the mean molecular weight of the polyvinyl pyrrolidone or copolymer is approximately 40,000 Dalton.

4. Dispersion as claimed in claims 1-3, characterized in that the concentration of the particle growth inhibitor is 0.05-20% by weight, is preferably 2-10% by weight and more preferably 5-10% by weight.

5. Dispersion as claimed in claims 1-4, characterized in that the carbamate concentration is 50-600 g/l, is preferably 100-500 g/l and more preferably 100-400 g/l.

6. Herbicide concentrate comprising a watery dispersion as claimed in claims 1-5.

7. Method for treating beet culture with a herbicide wherein a herbicide concentrate as claimed in claim 6 is diluted with water and applied in a herbicidally active quantity to said beet culture.

## Claims (Claims for the following Contracting State(s): ES)

1. Method for preparing a Watery dispersion of a biologically active carbamate selected from the group consisting of propham, phenmedipham and desmedipham, comprising polyvinyl, pyrrolidone or a copolymer thereof as particle growth inhibitor, wherein the carbamate and the polyvinyl pyrrolidone are added separately to a volume of water and forming the watery dispersion, such that after three months at 40°C substantially no carbamate crystals occur in the watery dispersion having a particle size greater than 40 ppm.

2. Method as claimed in claim 1, characterized in that the particle growth inhibitor is a cross-linked homo-polymer of N-vinyl-2 pyrrolidone.

3. Method as claimed in claim 1 or 2, characterized in that the mean molecular weight of the polyvinyl pyrrolidone or copolymer is approximately 40,000 Dalton.

4. Method as claimed in claims 1-3, characterized in that the concentration of the particle growth inhibitor is 0.05-20% by weight, is preferably 2-10% by weight and more preferably 5-10% by weight.

5. Method as claimed in claims 1-4, characterized in that the carbamate concentration is 50-600 g/l, is preferably 100-500 g/l and more preferably 100-400 g/l.

6. Method for producing a Herbicide concentrate comprising the addition of a watery dispersion prepared in claims 1-5.

7. Method for treating beet culture with a herbicide wherein a herbicide concentrate as claimed in claim 6 is diluted with water and applied in a herbicidally active quantity to said beet culture.

## Patentansprüche (Patentansprüche für folgende(n) Vertragsstaat(en): BE, CH, FR, GB, IT, LI, NL)

1. Wäßrige Dispersion eines biologisch wirksamen Carbamats, ausgewählt aus der aus Propham, Phenmedipham und Desmedipham bestehenden Gruppe, enthaltend Polyvinylpyrrolidon oder ein Copolymeres desselben als Inhibitor für das Teilchenwachstum, erhalten durch separate Zugabe des Carbamats und des Polyvinylpyrrolidons zu einem Volumen Wasser und Bildung der wäßrigen Dispersion, so daß nach drei Monaten bei 40°C in der wäßrigen Dispersion im wesentlichen keine Carbamatkristalle mit einer Teilchengröße von mehr als 40 »m auftreten.

2. Dispersion nach Anspruch 1, dadurch gekennzeichnet, daß der Inhibitor für das Teilchenwachstum ein vernetztes Homopolymer des N-Vinyl-2-pyrrolidons ist.

3. Dispersion nach Anspruch 1 oder 2, dadurch gekennzeichnet, daß das mittlere Molekulargewicht des Polyvinylpyrrolidons bzw. des Copolymeren etwa 40.000 Dalton beträgt.

4. Dispersion nach den Ansprüchen 1 bis 3, dadurch gekennzeichnet, daß die Konzentration des Inhibitors des Teilchenwachstums 0,05-20 Gew.-%, vorzugsweise 2-10 Gew.-% und besonders bevorzugt 5-10 Gew.-% beträgt.

5. Dispersion nach den Ansprüchen 1 bis 4, dadurch gekennzeichnet, daß die Carbamatkonzentration 50-600 g/l, vorzugsweise 100-500 g/l und besonders bevorzugt 100-400 g/l beträgt.

6. Herbizidkonzentrat, enthaltend eine wäßrige Dispersion gemäß den Ansprüchen 1 bis 5.

7. Verfahren zur Behandlung einer Rübenkultur mit einem Herbizid, bei dem ein Herbizidkonzentrat gemäß Anspruch 6 mit Wasser verdünnt und in einer herbizidmäßig wirksamen Menge bei der Rübenkultur angewendet wird.

## Patentansprüche (Patentansprüche für folgende(n) Vertragsstaat(en): ES)

1. Verfahren zur Zubereiting eines Wäßrige Dispersion eines biologisch wirksamen Carbamats, ausgewählt aus der aus Propham, Phenmedipham und Desmedipham bestehenden Gruppe, enthaltend Polyvinylpyrrolidon oder ein Copolymeres desselben als Inhibitor für das Teilchenwachstum, dadurch gekennzeichnet durch separate Zugabe des Carbamats und des Polyvinylpyrrolidons zu einem Volumen Wasser und Bildung der wäßrigen Dispersion, so daß nach drei Monaten bei 40°C in der wäßrigen Dispersion im wesentlichen keine Carbamatkristalle mit einer Teilchengröße von mehr als 40 »m auftreten.

2. Verfahren nach Anspruch 1, dadurch gekennzeichnet, daß der Inhibitor für das Teilchenwachstum ein vernetztes Homopolymer des N-Vinyl-2-pyrrolidons ist.

3. Verfahren nach Anspruch 1 oder 2, dadurch gekennzeichnet, daß das mittlere Molekulargewicht des Polyvinylpyrrolidons bzw. des Copolymeren etwa 40.000 Dalton beträgt.

4. Verfahren nach den Ansprüchen 1 bis 3, dadurch gekennzeichnet, daß die Konzentration des Inhibitors des Teilchenwachstums 0,05-20 Gew.-%, vorzugsweise 2-10 Gew.-% und besonders bevorzugt 5-10 Gew.-% beträgt.

5. Verfahren nach den Ansprüchen 1 bis 4, dadurch gekennzeichnet, daß die Carbamatkonzentration 50-600 g/l, vorzugsweise 100-500 g/l und besonders bevorzugt 100-400 g/l beträgt.

6. Verfahren zur Herstellung eines Herbizidkonzentrat, enthaltend die Zugabe eine zubereitene wäßrige Dispersion gemäß den Ansprüchen 1 bis 5.

7. Verfahren zur Behandlung einer Rübenkultur mit einem Herbizid, bei dem ein Herbizidkonzentrat gemäß Anspruch 6 mit Wasser verdünnt und in einer herbizidmäßig wirksamen Menge bei der Rübenkultur angewendet wird.

## Revendications (Revendications pour l'(les) Etat(s) contractant(s) suivant(s): BE, CH, FR, GB, IT, LI, NL)

1. Dispersion aqueuse d'un carbamate biologiquement actif choisi dans le groupe composé du prophame, du phenmédiphame et du desmédiphame, comprenant du polyvinylpyrrolidone ou un copolymère de celui-ci en tant qu'inhibiteur de croissance particulaire, obtenue en ajoutant séparément le carbamate et le polyvinylpyrrolidone à un volume d'eau et en formant la dispersion aqueuse, de sorte qu'après trois mois à 40°C pratiquement aucun cristal de carbamate ayant une grosseur de particule supérieure à 40 »m n'apparaît pas dans la dispersion aqueuse.

2. Dispersion suivant la revendication 1, caractérisée en ce que l'inhibiteur de croissance particulaire est un homo-polymère réticulé de N-vinyl-2 pyrrolidone.

3. Dispersion suivant la revendication 1 ou 2, caractérisée en ce que la masse moléculaire du polyvinylpyrrolidone ou du copolymère est de 40000 Dalton environ.

4. Dispersion suivant les revendications 1 à 3, caractérisée en ce que la concentration de l'inhibiteur de croissance particulaire est de 0,05 à 20% en poids, est de préférence de 2 à 10% en poids et avec une préférence plus grande pour une valeur de 5 à 10% en poids.

5. Dispersion suivant les revendications 1 à 4, caractérisée en ce que la concentration de carbamate est de 50 à 600 g/l, est de préférence de 100 à 500 g/l et avec une préférence plus grande pour une valeur de 100 à 400 g/l.

6. Concentré d'herbicide comprenant une dispersion aqueuse suivant les revendications 1 à 5.

7. Procédé de traitement des cultures de la betterave avec un herbicide dans lequel un concentré d'herbicide suivant la revendication 6 est dilué avec de l'eau et appliqué en quantité active en tant qu'herbicide auxdites cultures de betterave.

## Revendications (Revendications pour l'(les) Etat(s) contractant(s) suivant(s): ES)

1. Procédé de preparation d'un Dispersion aqueuse d'un carbamate biologiquement actif choisi dans le groupe composé du prophame, du phenmédiphame et du desmédiphame, comprenant du polyvinylpyrrolidone ou un copolymère de celui-ci en tant qu'inhibiteur de croissance particulaire, dans lequel le carbamate et le polyvinylpyrrolidone sont ajouté séparément à un volume d'eau et en formant la dispersion aqueuse, de sorte qu'après trois mois à 40°C pratiquement aucun cristal de carbamate ayant une grosseur de particule supérieure à 40 »m n'apparaît pas dans la dispersion aqueuse.

2. Procédé suivant la revendication 1, caractérisée en ce que l'inhibiteur de croissance particulaire est un homo-polymère réticulé de N-vinyl-2 pyrrolidone.

3. Procédé suivant la revendication 1 ou 2, caractérisée en ce que la masse moléculaire du polyvinylpyrrolidone ou du copolymère est de 40000 Dalton environ.

4. Procédé suivant les revendications 1 à 3, caractérisée en ce que la concentration de l'inhibiteur de croissance particulaire est de 0,05 à 20% en poids, est de préférence de 2 à 10% en poids et avec une préférence plus grande pour une valeur de 5 à 10% en poids.

5. Procédé suivant les revendications 1 à 4, caractérisée en ce que la concentration de carbamate est de 50 à 600 g/l, est de préférence de 100 à 500 g/l et avec une préférence plus grande pour une valeur de 100 à 400 g/l.

6. Procédé de production d'un Concentré d'herbicide comprenant l'addition d'une dispersion aqueuse preparé suivant les revendications 1 à 5.

7. Procédé de traitement des cultures de la betterave avec un herbicide dans lequel un concentré d'herbicide suivant la revendication 6 est dilué avec de l'eau et appliqué en quantité active en tant qu'herbicide auxdites cultures de betterave.
